(19) Europäisches Patentamt
European Patent Office
Office européen des brevets

(11) **EP 1 992 967 B1**

(12) **EUROPEAN PATENT SPECIFICATION**

(45) Date of publication and mention
of the grant of the patent:
**12.09.2018  Bulletin 2018/37**

(51) Int Cl.:
***G01V 1/20*** (2006.01)

(21) Application number: **08163826.4**

(22) Date of filing: **23.03.2006**

(54) **Antenna system for capturing underwater sound waves and method for capturing underwater sound waves**

Antennensystem zur Erfassung von Unterwasser-Schallwellen und Verfahren zur Erfassung von Unterwasser-Schallwellen

Système d'antenne destiné à capturer des ondes sonores sous-marines et procédé destiné à capturer des ondes sonores sous-marines

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **24.03.2005  IT TO20050192**

(43) Date of publication of application:
**19.11.2008  Bulletin 2008/47**

(62) Document number(s) of the earlier application(s) in
accordance with Art. 76 EPC:
**06725292.4 / 1 866 668**

(73) Proprietor: **LEONARDO S.p.A.
00195 Roma (IT)**

(72) Inventors:
• **Balbi, Mario
80070, BACOLI (IT)**
• **Marasco, Renato
80070, MONTE DI PROCIDA (IT)**

(74) Representative: **Bergadano, Mirko et al
Studio Torta S.p.A.
Via Viotti, 9
10121 Torino (IT)**

(56) References cited:
**US-A- 3 718 207     US-A- 4 314 363
US-A- 5 345 522**

## Description

The present invention relates to an antenna system for detecting underwater sound waves.

There are known antenna systems comprising an elongated sensor member (typically cylindric-shaped) arranged on a first end of an insulated wire presenting a second end carried by an unwinding device arranged on the rear portion of a platform which feeds the wire into the water and drags the antenna system using it for detecting sound waves present in the sea.

Such sound waves can be typically generated by means which are potentially hostile to the platform (for example submarines) or by attacking devices (in particular torpedoes) used by hostile means.

Other applications are obviously possible, for example scientific applications for the study of sound waves generated by different sources, for example by animals.

The known devices typically use a sensor member comprising a plurality of piezoelectric transducers which are formed by alternated metal pile and ceramic cells stratified structures. Such piezoelectric transducers, which may operate as either receiving and/or transmitting members, are however big, extremely costly and also intrinsically fragile.

Furthermore, due to the weight and dimensions of the sensor member and the insulated wire, the unwinding device is big (for example, it may be several metres high), heavy and presents equally high manufacturing and maintenance costs.

Transportation by the antenna system dragging platform contributes also to braking the motion of the platform with consequent decrease of performance in terms of platform speed and/or acceleration and in terms of fuel consumption increase.

The sensor member is highly disturbed by the hydrodynamic noise caused by the flow of water on the walls of the sensor member itself; furthermore, also the platform propellers contribute to generating a high disturbance of the sensor member which is at a fixed, and generally not very great, distance from the propellers.

The prior art US 5 345 522 discloses an optical fibre lowed sensor for underwater sound detection system. US 4 314 363 discloses a marine seismic streamer cable handler.

It is the object of the present invention to achieve an antenna system which solves the drawbacks of the known art and which in particular is small, light and cost-effective, allows a stabilization of the sensor member on the horizontal plane, also maintaining the orientation on the vertical plane and which at the same time contributes to drastically limiting the hydrodynamic noise acting on the sensor member.

The present object is reached by the present invention in that it relates to an antenna system for capturing underwater waves as claimed in claim 1.

In this way, since the unwinding speed of the fibre is essentially equal and opposite to that of the platform, the zone surrounding the sensor member is not subject to high perturbations and the hydrodynamic noise considerably decreases. In this way, the signal/noise ratio of the sensor member is drastically improved.

Furthermore, the sensor member is increasingly distanced from the (noisy) stern zone while the fibre is unwinding, in this way the signal/noise ratio of the sensor member increases also in time.

The entire system uses cost-effective, small sized, light weight and easy maintenance components. The performance of the platform is also improved and the respective fuel consumption is reduced.

The invention will be explained with particular reference to the accompanying figures showing a preferred embodiment thereof, in which:

- figure 1 schematically shows an antenna system for detecting underwater sound waves made according to the dictates of the present invention;
- figure 2 shows in greater detail parts composing the system in figure 1; and
- figure 3 shows on a magnified scale a detail of figure 2.

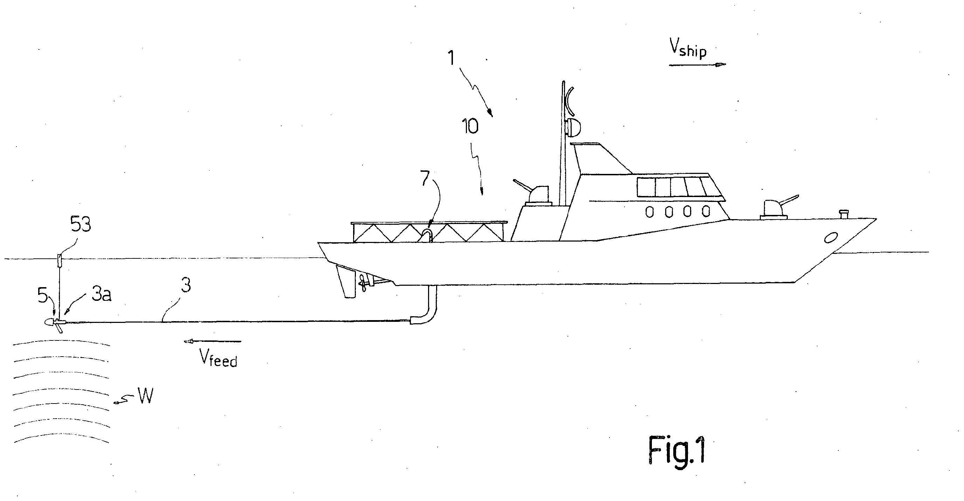

In figure 1, it is indicated as a whole by 1 an antenna system for capturing underwater sound waves comprising:

- an optical fibre 3 which makes a sensor member 5 on its free end 3a for underwater waves W;
- a controlled unwinding device 7 of the optical fibre carried by a dragging platform 10 (for example a ship, schematically shown) and adapted to allow the entrance of the optical fibre in the water at an unwinding speed opposite to the speed of advancement of the platform 10 in order to minimise the hydrodynamic noise acting on the sensor member 5.

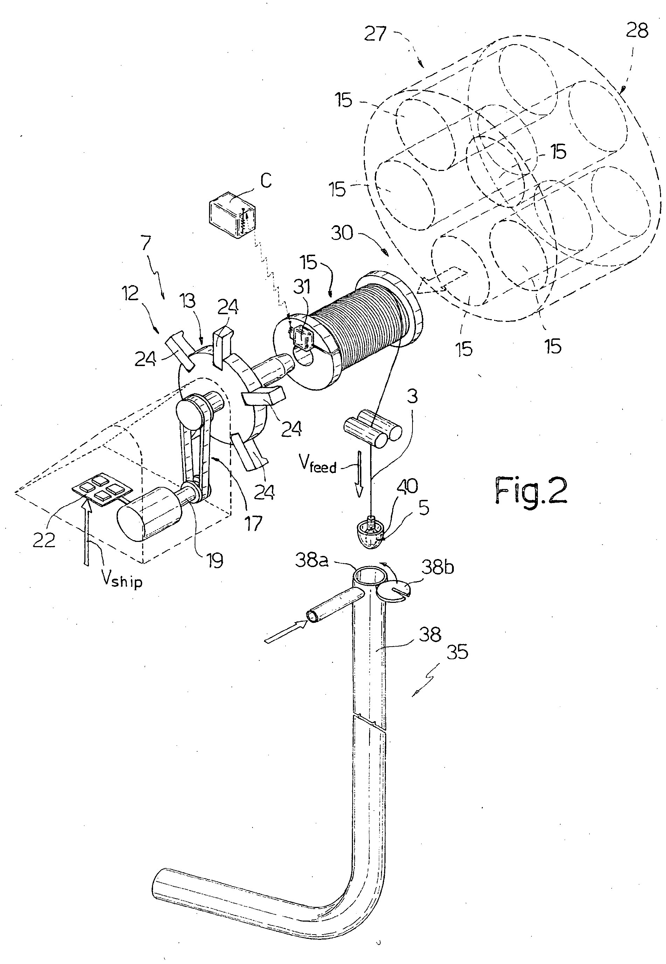

In particular, the controlled unwinding device 7 comprises (figure 2) a winch 12 which is provided with a spindle member 13 adapted to carry a reel 15 on which the optical fibre 3 is wound.

The spindle member 13 is connected, through a transmission 17 (schematically shown), to the output shaft of a motor 19 (of the electrical or pneumatic type) which in turn is powered/controlled by a control electronics 22 which receives the reaction signals (including a signal expressing the instantaneous advancement speed of the platform **Vship**) adjusting the rotational speed of the motor 19 and consequently the rotational speed $\omega$ of the spindle member 13. The spindle member 13 is provided with a coupling device 24 of the releasable type (of known type) adapted to make - when activated - an angularly and axially stabile connection between the spindle member 13 and the reel 15 so that the latter turns at an angular rotational speed $\omega$ controlled by the control electronics 22 so that the speed **Vfeed** at which the optical fibre is released into the sea has equal modulus and essentially opposite direction to the speed of advancement of the platform, i.e.:

$$Vship + Vfeed = 0$$

Or

$$Vfeed=Vship - \Delta V \; ;$$

where $\Delta V > 0$ is a very small difference in motion (e.g. < 1 node) adapted to avoid a deformation of the fibre by effect of sea currents.

According to a preferred embodiment of the invention, a storage device 27 adapted to contain a plurality of reels 15 arranged, in the example shown, inside a rotating drum 28 angularly and equally distanced one from the other is envisaged.

The storage device 27 is adapted to cooperate with a loading and unloading device 30 (schematically shown) adapted to take a singular reel 15 from the storage device for installing it on the spindle 13. Such loading and unloading device 30 is also adapted to take the reel 15 from the spindle member 13 after unwinding the optical fibre 3 to feed the reel 15 to an unloading system (not shown).

Each reel 15 also integrally carries an electronic unit 31 which feeds a flow of radiations inside the fibre 3 and receives the light radiation in response from the sensor 5; such light radiation in response is processed in order to detect the distortions that the underwater sound waves make on the sensor 5, thus detecting the entity of the underwater sound waves.. The data detected by the electronic unit 13 can be transmitted to a central processing unit C by means of a functional connection.

According to a preferred embodiment of the invention, a launch device 35 adapted to release the sensor member 5 in the water so that the optical fibre 3 is unwound in the water away from the stern turbulence zone of the platform 10 is envisaged.

Typically, the launch device 35 comprises a launch tube 38 presenting a feeding end 38a closable by a shutter 38b in which an extraction body 40 carrying the sensor member 5 and being hermetically accommodated inside the launch tube 38 behaving as a piston is inserted. The launch of the extraction body 40 and thus of the optical fibre 3 integral therewith is made using a pneumatic system (of the known type - not shown) which feeds a compressed air pulse into the launch tube 38.

The shutter 38 can also cut the optical fibre 3 at the end of the mission.

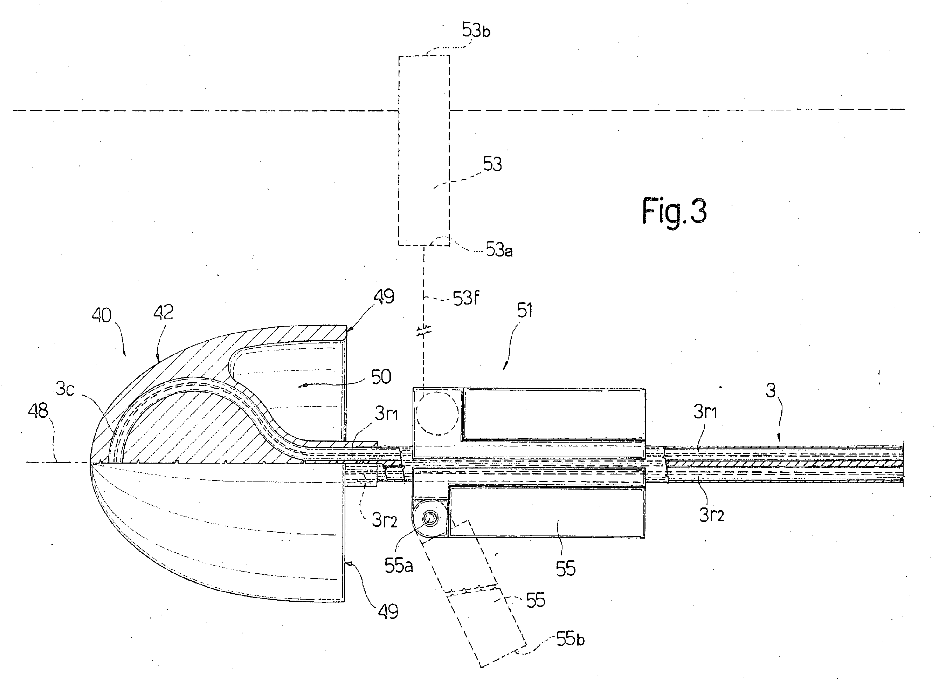

The extraction body 40 presents a particular shape (see figure 3) for performing the hydrodynamic brake function placed at the end of the optical fibre 3 submerged in the water.

In the example shown, the hydrodynamic brake 40 is exteriorly limited on a first side by a dome shaped wall 42 coaxial to an axis 48 and is exteriorly limited on the opposite side by a wall 49, in which a deep annular seat 50 is made which is adapted to increase the active surface on which the water impacts thus increasing the hydrodynamic braking action.

The hydrodynamic brake 40 accommodates inside the end of the optical fibre 3 making, the sensor 5 which comprises three integral segments of fibre including: a first straight segment 3r1, a second circular segment 3c extending inside the hydrodynamic brake body 40 and a second final straight segment 3r2 overlapped and arranged by the side of the first straight segment 3rl.

Several discontinuities of the fibre 3 (for example Bragg gratings) contributing to defining the sensor 5 for detecting pressure waves are conveniently made in segments 3r1 and 3r2.

Figure 3 shows a device 51 adapted to make a preferential orientation and a height stabilisation of the sensor member 5 in the water.

The preferential orientation device 51 comprises a float 53 coupled to the sensor member 5 by means of a wire 53f for applying an upward bias to the sensor member 5 and a ballast 55 adapted to apply a bias opposite to that of the float 53 so that the sensor member 5 is arranged, in the water, at a depth equal to the length of the wire 53f and on an approximately horizontal plane, i.e. with the overlapped fibre segments 3r1 and 3r2 essentially coplanar to such horizontal plane.

According to the invention, the float 53 and the ballast 55 present an elongated C-section shape and respectively comprise a first end 53a/55a tied to a wire 53f/hinged on a wall (not shown) axially extending from the extraction body 40 and a second end 53b, 55b fixed to the fibre 3 by means of an adhesive very rapidly soluble in the water.

In this way, the float 53 and the ballast 55 are arranged with straight edges reciprocally side by side forming a tube structure when the body 40 is not in the water.

When the body 40 is launched into the sea, the glue melts and the second ends 53b, 55b of the float 53 and of the ballast 55 move away from the fibre 3, the two bodies turn, the float 53 is detached thus rising towards the surface and unwinding the wire 53f, and the ballast 55 is arranged transversally to the fibre 3 tending to make the sensor member "sink". When the float 53 reaches the surface and the ballast 55 reaches the height equivalent to the length of the wire, the sensor member is stabilised on the horizontal plane, also maintaining the orientation conferred by the two biases on the vertical plane.

**Claims**

1. An antenna system for capturing underwater sound waves of the type comprising:

- an optical fibre (3) making a sensor member (5) on its free end (3a) for underwater sound waves;
controlled unwinding means (7) of said optical fibre (3) carried by a dragging platform (10) and adapted to allow the entrance of the optical fibre (3) in the water at an unwinding speed opposite to the speed of advancement of the platform to minimise the hydrodynamic noise acting on the sensor member (5), **characterized by** comprising preferential orientation and height stabilisation means (51) adapted to make a preferential orientation of the sensor member (5) in the water and an arrangement of the sensor member at a predetermined depth;
wherein said preferential orientation means (51) comprise elongated and C-shaped floating means (53) coupled to said sensor member (5) for applying an upward bias and elongated and C-shaped ballast means (55) adapted to apply a bias opposite to that of the floating means (53) so that said sensor member (5) is arranged, in the water, on an approximately horizontal plane; in which an unwindable wire is arranged between the floating means (53) and said sensor member (5);
said floating means (53) comprise a first end (53a) tied to said wire (53f) that extends from a body (40) carrying a portion of the optical fibre;
said ballast means (55) comprising a first end hinged to said body (40);
said floating means (53) and said ballast means (55) comprise respective second end (53b, 55b) fixed to the fibre (3) by means of an adhesive very rapidly soluble in the water.

2. A system according to claim 1, wherein said unwinding means (7) comprise a winch (12) which is provided with a rotating member (13) angularly mobile under the bias of controlled (22) motor means (19) and adapted to releasably carry (24) a support (15) on which the optical fibre (3) is wound.

3. A system according to claim 2, wherein electronic control means (22) receiving in input reaction signals including a signal expressing the instantaneous advancement speed **Vship** of said dragging platform are envisaged; said electronic control means (22) adjusting the rotational speed of said motor (19) for controlling the angular rotation speed $\omega$ of said support (15) so that the latter turns at an angular speed $\omega$ such that the speed **Vfeed** at which the optical fibre is released into the sea has an equal, or slightly lower, modulus and a direction essentially opposite to the advancement speed **Vship** of the dragging platform (10).

4. A system according to claim 2, comprising a storage device (27) adapted to contain a plurality of supports (15) and adapted to cooperate with a loading and unloading device (30) adapted to take a singular support (15) from the storage device for installing it on the rotating member (13); said loading and unloading device (30) being further adapted to take and unload the support (15) from the rotating member (13) after unwinding the optical fibre (3).

5. A system according to claim 4, wherein said support (15) further integrally carries an electronic unit (31) which feeds a flow of radiations inside the fibre (3) and receives the light radiation in response from the sensor (5) ; said light radiation in response is processed in order to detect the distortions made by the underwater sound waves on the sensor, thus detecting the entity and the direction of the underwater waves.

6. A system according to claim 1, comprising a release device (35) which is adapted to release the sensor member (5) in the water so that the optical fibre (3) is unwound in the water away from the stern turbulence zone of the platform (10).

7. A system according to claim 6, wherein the release device (35) is a launch device (35) that comprises a launch tube (38) presenting one feeding end (38a) closable by a shutter (38b) in which an extraction body is inserted (40) which carries the sensor member (5) and which hermetically accommodates inside the launch tube (38) behaving like a piston; the release of the extraction body (40) and therefore of the optical fibre integral therewith being made using a pneumatic system which feeds a compressed air pulse inside the launch tube (38).

8. A system according to claim 1, wherein a hydrodynamic brake (40) placed at the end of the optical fibre (3) is envisaged.

9. A system according to claim 8, wherein said hydrodynamic brake (40) accommodates at least partially said sensor member (5).

10. A system according to claim 8, wherein said hydrodynamic brake (40) is exteriorly limited on a first side by a first shaped wall (42), in particular dome-shaped, coaxial with an axis (48) and is exteriorly limited on the opposite side by a second wall (49) in which a deep annular seat (50) adapted to increase the active surface is made on which the water impacts thus increasing the hydrodynamic braking action.

11. A system according to claim 1, wherein said sensor member comprises three integral segments of optical fibre (3) including a first straight segment (3r1), a second curved segment (3c) and a second final straight segment (3r2) overlapped and arranged by the side of the first straight segment (3rl).

## Patentansprüche

1. Antennensystem zum Erfassen von Unterwasserschallwellen jener Art, die umfasst:

   - eine Lichtleitfaser (3), die ein Sensorelement (5) an ihrem freien Ende (3a) für Unterwasserschallwellen bildet;
   ein kontrolliertes Abwickelmittel (7) der Lichtleitfaser (3), das durch eine Schleppplattform (10) getragen wird und ausgebildet ist, das Eintreten der Lichtleitfaser in das Wasser bei einer Abwickelgeschwindigkeit zu ermöglichen, die der Vorschubgeschwindigkeit der Plattform entgegengesetzt ist, um das hydrodynamische Rauschen, das auf das Sensorelement (5) wirkt, zu minimieren, **dadurch gekennzeichnet, dass** es ein Stabilisierungsmittel (51) einer bevorzugten Orientierung und Höhe umfasst, das ausgebildet ist, eine bevorzugte Orientierung des Sensorelements (5) im Wasser und eine Anordnung des Sensorelements in einer vorbestimmten Tiefe zu erzielen;
   wobei das bevorzugte Orientierungsmittel (51) ein längliches und C-förmiges, schwimmendes Mittel (53) umfasst, das an das Sensorelement (5) gekoppelt ist, um eine Ausrichtung nach oben vorzunehmen, und ein längliches und c-förmiges Ballastmittel (55), das ausgebildet ist, eine Ausrichtung vorzunehmen, die jener des schwimmenden Mittels (53) entgegengesetzt ist, sodass das Sensorelement (5) im Wasser auf einer annähernd horizontalen Ebene angeordnet ist;
   in dem ein nicht abwickelbarer Draht zwischen dem schwimmenden Mittel (53) und dem Sensorelement (5) angeordnet ist;
   wobei das schwimmende Mittel (53) ein erstes Ende (53a) umfasst, das an den Draht (53f) gebunden ist, der sich von einem Körper (40) erstreckt, der einen Abschnitt der Lichtleitfaser trägt;
   das Ballastmittel (55) ein erstes Ende umfasst, das an den Körper (40) angelenkt ist;
   das schwimmende Mittel (53) und das Ballastmittel (55) ein entsprechendes zweites Ende (53b, 55b) umfassen, das an der Faser (3) durch einen Klebstoff fixiert ist, der rasch im Wasser löslich ist.

2. System nach Anspruch 1, wobei das Abwickelmittel (7) eine Winde (12) umfasst, die mit einem Drehelement (13) versehen ist, das unter der Ausrichtung eines kontrollierten (22) Motormittels (19) winkelig mobil ist und ausgebildet ist, lösbar eine Halterung (15) zu tragen (24), auf der die Lichtleitfaser (3) aufgewickelt ist.

3. System nach Anspruch 2, wobei ein elektronisches Steuermittel (22), das Eingangsreaktionssignale empfängt, die ein Signal enthalten, das die momentane Vorschubgeschwindigkeit Vship der Schleppplattform angibt, in Betracht gezogen wird; wobei das elektronische Steuermittel (22) die Drehzahl des Motors (19) zum Steuern der Winkeldrehzahl ω der Halterung (15) einstellt, sodass diese bei einer Winkelgeschwindigkeit ω dreht, sodass die Geschwindigkeit Vfeed, bei der die Lichtleitfaser in das Meer freigegeben wird, einen gleichen oder etwas geringeren Betrag und eine Richtung hat, die im Wesentlichen der Vorschubgeschwindigkeit Vship der Schleppplattform (10) entgegengesetzt ist.

4. System nach Anspruch 2, umfassend eine Lagervorrichtung (27), die ausgebildet ist, mehrere Halterungen (15) zu beinhalten, und ausgebildet ist, mit einer Lade- und Entladevorrichtung (30) zusammenzuarbeiten, die ausgebildet ist, eine einzige Halterung (15) aus der Lagervorrichtung zu entnehmen, um diese auf dem Drehelement (13) zu installieren; wobei die Lade- und Entladevorrichtung (30) ferner ausgebildet ist, die Halterung (15) nach Abwickeln der Lichtleitfaser vom Drehelement (13) zu nehmen und zu entladen.

5. System nach Anspruch 4, wobei die Halterung (15) ferner eine elektronische Einheit (31) integriert trägt, die einen Fluss von Strahlungen im Inneren der Faser (3) zuführt und die Lichtstrahlung als Reaktion vom Sensor (5) empfängt; wobei die Lichtstrahlung als Reaktion verarbeitet wird, um die Verzerrungen zu erfassen, die durch die Unterwasserschallwellen an dem Sensor entstehen, wodurch die Größe und die Richtung der Unterwasserwellen detektiert werden.

6. System nach Anspruch 1, umfassend eine Freigabevorrichtung (35), die ausgebildet ist, das Sensorelement (5) im Wasser freizugeben, sodass die Lichtleitfaser (3) im Wasser abseits der Heckturbulenzzone der Plattform (10) abgewickelt wird.

7. System nach Anspruch 6, wobei die Freigabevorrichtung (35) eine Einführungsvorrichtung (35) ist, die ein Einführungsrohr (38) umfasst, das ein Zuleitungsende (38a) präsentiert, das durch einen Verschluss (38b) verschließbar ist, in das ein Extraktionskörper eingesetzt (40) wird, der das Sensorelement (5) trägt und hermetisch im Inneren des Einführungsrohrs (38) aufgenommen ist, wobei er sich wie ein Kolben verhält; wobei die Freigabe des Extraktionskörpers (40) und somit der damit integrierten Lichtleitfaser unter Verwendung eines pneumatischen Systems erfolgt, das einen Druckluftpuls im Inneren des Einführungsrohrs (38) zuleitet.

8. System nach Anspruch 1, wobei eine hydrodynamische Bremse (40), die am Ende der Lichtleitfaser (3) platziert ist, in Betracht gezogen wird.

9. System nach Anspruch 8, wobei die hydrodynamische Bremse (40) zumindest teilweise das Sensorelement (5) aufnimmt.

10. System nach Anspruch 8, wobei die hydrodynamische Bremse (40) an der Außenseite an einer ersten Seite durch eine erste geformte Wand (42), die insbesondere kuppelförmig ist, koaxial mit einer Achse (48) begrenzt ist und an der Außenseite an einer gegenüberliegenden Seite durch eine zweite Wand (49) begrenzt ist, in der ein tiefer ringförmiger Sitz (50), der ausgebildet ist, die aktive Oberfläche zu vergrößern, gebildet ist, auf den das Wasser auftrifft, wodurch die hydrodynamische Bremswirkung erhöht wird.

11. System nach Anspruch 1, wobei das Sensorelement drei integrierte Segmente einer Lichtleitfaser (3) umfasst, enthaltend ein erstes gerades Segment (3r1), ein zweites gekrümmtes Segment (3c) und ein zweites gerades Endsegment (3r2), das durch die Seite des ersten geraden Segments (3r1) überlappt und an dieser angeordnet ist.

**Revendications**

1. Système d'antenne destiné à capturer des ondes sonores sous-marines du type comprenant :

- une fibre optique (3) formant un élément capteur (5) sur son extrémité libre (3a) pour des ondes sonores sous-marines ;
des moyens de déroulement (7) commandés de ladite fibre optique (3) portés par une plate-forme de traînage (10) et conçus pour permettre l'entrée de la fibre optique (3) dans l'eau à une vitesse de déroulement opposée à la vitesse d'avancement de la plate-forme en vue de minimiser le bruit hydrodynamique agissant sur l'élément capteur (5), **caractérisé en ce qu'**il comprend des moyens d'orientation préférentielle et de stabilisation de hauteur (51) conçus pour permettre une orientation préférentielle de l'élément capteur (5) dans l'eau et un agencement de l'élément capteur à une profondeur prédéterminée ;
dans lequel lesdits moyens d'orientation préférentielle (51) comprennent des moyens de flottement (53), allongés et en forme de C, couplés audit élément capteur (5) pour appliquer une déformation vers le haut et des moyens de lestage (55), allongés et en forme de C, conçus pour appliquer une déformation opposée à celle des moyens de flottement (53) de sorte que ledit élément capteur (5) soit agencé, dans l'eau, sur un plan approximativement horizontal ;
dans lequel un câble déroulable est agencé entre les moyens de flottement (53) et ledit élément capteur (5) ;
lesdits moyens de flottement (53) comprennent une première extrémité (53a) attachée audit câble (53f) qui s'étend depuis un corps (40) portant une partie de la fibre optique ;
lesdits moyens de lestage (55) comprenant une première extrémité articulée contre ledit corps (40) ;
lesdits moyens de flottement (53) et lesdits moyens de lestage (55) comprennent une seconde extrémité (53b, 55b) respective attachée à la fibre (3) au moyen d'un adhésif très rapidement soluble dans l'eau.

2. Système selon la revendication 1, dans lequel lesdits moyens de déroulement (7) comprennent un treuil (12) qui est muni d'un élément rotatif (13) angulairement mobile sous la déformation de moyens de moteur (19) commandés (22) et conçu pour porter (24) de manière amovible un support (15) sur lequel la fibre optique (3) est enroulée.

3. Système selon la revendication 2, dans lequel des moyens de commande électronique (22) recevant des signaux de réaction d'entrée incluant un signal exprimant la vitesse d'avancement instantanée Vship de ladite plate-forme de traînage sont prévus ;
lesdits moyens de commande électronique (22) réglant la vitesse de rotation dudit moteur (19) pour commander la vitesse de rotation angulaire ω dudit support (15) de sorte que ce dernier tourne à une vitesse angulaire ω telle que la vitesse Vfeed à laquelle la fibre optique est libérée jusque dans la mer a un module égal, ou légèrement inférieur, et une direction essentiellement opposée à la vitesse d'avancement Vship de la plate-forme de traînage (10).

4. Système selon la revendication 2, comprenant un dispositif de stockage (27) conçu pour contenir une pluralité de supports (15) et conçu pour coopérer avec un dispositif de chargement et de déchargement (30) conçu pour prendre un unique support (15) du dispositif de stockage pour l'installer sur l'élément rotatif (13) ; ledit dispositif de chargement et de déchargement (30) étant en outre conçu pour prendre et décharger le support (15) depuis l'élément rotatif (13) après déroulement de la fibre optique (3).

5.  Système selon la revendication 4, dans lequel ledit support (15) porte en outre intégralement une unité électronique (31) qui alimente l'intérieur de la fibre (3) avec un flux de rayonnements et reçoit le rayonnement visible en réponse depuis le capteur (5) ; ledit rayonnement visible en réponse est traité afin de détecter les distorsions faites par les ondes sonores sous-marines sur le capteur, détectant ainsi l'entité et la direction des ondes sous-marines.

6.  Système selon la revendication 1, comprenant un dispositif de libération (35) qui est conçu pour libérer l'élément capteur (5) dans l'eau de sorte que la fibre optique (3) soit déroulée dans l'eau loin de la zone de turbulence de la poupe de la plate-forme (10).

7.  Système selon la revendication 6, dans lequel le dispositif de libération (35) est un dispositif de lancement (35) qui comprend un tube de lancement (38) présentant une extrémité d'alimentation (38a) pouvant être fermée par un obturateur (38b) dans lequel un corps d'extraction est inséré (40) qui porte l'élément capteur (5) et qui se loge hermétiquement à l'intérieur du tube de lancement (38) se comportant tel un piston ; la libération du corps (40) d'extraction et donc de la fibre optique solidaire de celui-ci étant faite à l'aide d'un système pneumatique qui alimente une impulsion d'air comprimé à l'intérieur du tube de lancement (38).

8.  Système selon la revendication 1, dans lequel un frein hydrodynamique (40) placé à l'extrémité de la fibre optique (3) est prévu.

9.  Système selon la revendication 8, dans lequel ledit frein hydrodynamique (40) loge au moins partiellement ledit élément capteur (5).

10. Système selon la revendication 8, dans lequel ledit frein hydrodynamique (40) est extérieurement limité sur un premier côté par une première paroi (42) façonnée, en particulier en forme de dôme, coaxiale à un axe (48) et est extérieurement limité sur le côté opposé par une seconde paroi (49) dans laquelle un siège annulaire (50) profond conçu pour augmenter la surface active est réalisé sur lequel l'eau produit un impact augmentant ainsi l'action du freinage hydrodynamique.

11. Système selon la revendication 1, dans lequel ledit élément capteur comprend trois segments solidaires de fibre optique (3) incluant un premier segment rectiligne (3r1), un second segment incurvé (3c) et un second segment rectiligne final (3r2) chevauché et agencé par le côté du premier segment rectiligne (3r1).

Fig.1

Fig.2

Fig.3

EP 1 992 967 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5345522 A
- US 4314363 A